# EUROPÄISCHE PATENTSCHRIFT

(11) **EP 0 429 877 B1**
(45) Veröffentlichungstag und Bekanntmachung des Hinweises auf die Patenterteilung: **28.06.1995**
(21) Anmeldenummer: 90120869.4
(22) Anmeldetag: 31.10.1990
(51) Int. Cl.: G02B 6/36, G02B 6/38, G02B 6/30, G02B 6/42

(54) **Vorrichtung zum Positionieren von Lichtleitfasern in Verbindungselementen**
Device for positioning optical fibres in connector elements
Dispositif de positionnement de fibres optiques dans des éléments de connexion

(30) Priorität: 25.11.1989 DE 3939112
(43) Veröffentlichungstag der Anmeldung: 05.06.1991
(73) Patentinhaber: Forschungszentrum Karlsruhe GmbH, 76133 Karlsruhe (DE)
(72) Erfinder: Ehrfeld, Wolfgang, Dr., W-7500 Karlsruhe 41 (DE); Münchmeyer, Dietrich, Dr., W-7513 Stutensee 4 (DE); Schmidt, Dirk, Dr., W-7513 Stutensee 1 (DE)
(74) Vertreter: Gottlob, Peter, Dipl. Ing.

(56) Entgegenhaltungen:
- WO-A-89/01632
- DE-A- 3 404 613
- FR-A- 2 255 618
- US-A- 4 678 264
- PATENT ABSTRACTS OF JAPAN vol. 9, no. 151 (P-367)(1874) 26. Juni 1985 & JP-A-60 029 710

## Beschreibung

Die vorliegende Erfindung betrifft eine Vorrichtung zum Positionieren von Lichtleitfasern, vorzugsweise zur Positionierung von Lichtleitfasern in Lichtleitfaser-Verbindungselementen oder bezüglich integriert-optischer oder diskreter optischer oder optoelektronischen Bauelemente gemäß den Merkmalen im Oberbegriff des Patentanspruches 1.

Die Anwendung optischer Elemente in der Nachrichten- oder Meßtechnik setzt die Verfügbarkeit geeigneter optischer Wellenleiter oder Lichtleitfasern, von integrierten oder diskret aufgebauten optischen Komponenten, wie z.B. Sender und Empfänger, Verstärker, Multiplexer und Demultiplexer sowie der zugehörigen Verbindungstechnik zwischen Fasern untereinander sowie zwischen Fasern und Bauelementen voraus. Während die Faserherstellungstechnik und auch die Herstellung einer Reihe von Bauelementen schon einen recht fortgeschrittenen technischen Stand erreicht hat, ist die Faserankopplung, insbes. im Fall der Ankopplung an integriert-optische Bauelemente noch in keiner Weise befriedigend gelöst.

Faseroptische Verbindungselemente wie beispielsweise Steckverbinder bestehen in der Regel aus einem Justierelement, in dem die Faser fixiert wird und das die exakte Positionierung sicherstellt und einem Halteelement, beispielsweise einem metallischen Gehäuse bei Steckverbindern zwischen Fasern. Bei permanenten Verbindungen kann das Halteelement auch durch eine Klebung ersetzt werden. Als Justierelemente werden präzise geschliffene Metallhülsen, spritzgegossene Kunststoffteile, Kugeljustierungen und einkristalline Siliziumplättchen mit anisotrop geätzten, V-förmigen Gruben eingesetzt. Letztere finden insbes. Anwendung bei Mehrfachverbindungen, wenn beispielsweise die Aufgabe besteht, eine größere Anzahl von Lichtleitfasern an ein integriertes optisches Bauelement anzukoppeln.

Solche Vorrichtungen mit den Merkmalen des Oberbegriffes sind z.B. aus der DE-PS 23 63 986, der DE-OS 34 04 613 oder aus J. Geisler: "Optical Fibres", Pergamon 1986, Seite 256 bekannt. Gemeinsam ist diesen allen bekannten Vorrichtungen ein Grundkörper aus Silizium, welchem zur Führung der Lichtleitfasern V-förmige Rinnen eingebracht sind. Diese Rinnen lassen sich jedoch in der gewünschten Genauigkeit nur in V-Form mittels anisotropen Formätzens in Silizium als Grundmaterial herstellen. Dabei entstehen durch die Vorzugsrichtung beim Ätzen nur Rinnen in Längsrichtung. Andere Formen lassen sich nicht erzielen. Das Andrücken der Lichtleitfasern in die Rinnen muß durch hinzugefügte extra Federelemente erfolgen, wodurch die Führungspräzision beeinträchtigt wird. Durch die Herstellungsmöglichkeit aus nur Silizium sind diese Vorrichtungen nur zum Anschluß an Koppelglieder wiederum nur aus Silizium bzw. Materialien mit gleichem thermischen Ausdehnungskoeffizien geeignet. Sonst würden sich bei thermischen Belastungen Verschiebungen im »m-Bereich ergeben, die die Informationsübertragung erheblich beeinflussen würden. Vor allem sind solche Vorrichtungen dann ungeeignet, wenn Silizium nicht als Material verwendet werden kann, z.B. beim Anschluß von Lichtleitfasern an optoelektronische Bauelemente, da diese vorwiegend aus Glas- bzw. Lithiumniobat (LiNbO₃) hergestellt werden.

Anisotropgeätzte Siliziumplättchen als Justierelemente haben jedoch folgende Nachteile:

Der thermische Ausdehnungskoeffizient von Silizium entspricht in der Regel nicht dem Ausdehnungskoeffizienten des Substratmaterials des integriert-optischen Bauelementes, was zu Verschiebungen der Fasern gegenüber den optimalen Ankoppelpunkten bei Temperaturänderungen führt.

Die Geometrie aller Strukturen des Justierelements muß an die ätzbaren Siliziumkristallflächen angepaßt werden. Dies bedeutet, daß über die V-förmigen Rinnen für die Aufnahme der Fasern selbst kaum weitere Funktionselemente realisiert werden können. Insbes. gibt es keine Möglichkeiten zur Realisierung von Andruckfedern mittels des Ätzprozesses. Dies bedeutet, daß Federelemente nachträglich hinzugefügt werden müssen, was den Herstellungs- und Montageaufwand wesentlich vergrößert und gleichzeitig die Gestaltungsfreiheit einschränkt.

Die Genauigkeit des anisotopen Ätzens von Silizium ist für viele Anwendungen unzureichend, da Toleranzen in der Rinnenweite oder Fehljustierungen relativ zu den Kristallachsen stets zu Toleranzen in der Rinnentiefe führen, die eine falsche Höheneinstellung der Faser zur Folge haben.

Aufgabe der vorliegenden Erfindung ist es nun, eine neue Vorrichtung anzugeben, deren die Maßgenauigkeit bestimmenden Elemente wie z.B. die Trägerplatte zur Aufnahme der Führungselemente sich aus beliebigen Materialien herstellen läßt und dessen Führungs- und Verspannungselemente dabei mit höchster Genauigkeit auf dieser maßbestimmenden Trägerplatte sitzen. Die Vorrichtung soll insbes. Verwendung finden in Justierelementen für die Kopplung von Lichtleitfasern untereinander und für die Ankoppelung an integriert-optische oder diskrete optische oder opto-elektronische Bauelemente, wobei die Geometrie des Justierelements in weiten Grenzen frei wählbar sein und die Genauigkeit der charakteristischen Abmessungen im Submikrometerbereich liegen muß. Für die Herstellung soll eine breite Materialpalette zur Verfügung stehen.

Zur Lösung dieser Aufgabe schlägt nun die Erfindung die Merkmale vor, die im Kennzeichen des Patentanspruches 1 angegeben sind. Weitere vorteilhafte Ausgestaltungen der vorliegenden Erfindung ergeben sich aus den Merkmalen, die in den Kennzeichen der Unteransprüche angegeben sind.

Durch die vorliegende Erfindung wird nun eine besonders vorteilhafte Vorrichtung geschaffen, mit welcher die Koppelung von Lichtleitfasern untereinander und die Ankoppelung solcher an optische Bauelemente ermöglicht wird. Dabei kann die Geometrie des Justierelements bzw. der Vorrichtung in weiten Grenzen frei wählbar sein, wobei für die Herstellung eine breite Materialplatte zur Verfügung steht. Letztlich liegt die Genauigkeit der charakteristischen Abmessungen einer erfindungsgemäßen Vorrichtung im Submikrometerbereich.

Weitere Einzelheiten der vorliegenden Erfindung werden im folgenden anhand der Figuren 1 bis 8 näher erläutert.

Es zeigen
- die Figur 1: schematisch die Ausführung einer Lichleitfaser-Koppelung nach der erfindungsgemäßen Vorrichtung ohne Deckel,
- die Figur 2: dieselbe Anordnung mit Deckel,
- die Figur 3: eine einzelne Federzunge von unten durch den Bodenspalt geschnitten,
- die Figur 4: eine andere Ausführung der Zunge zur Demonstration der Variationsmöglichkeiten bei der Gestaltung
- die Figuren 5 bis 8: die Herstellungsschritte nach einem bekannten Verfahren der Röntgentiefenlithographie und der Galvanoplastik.

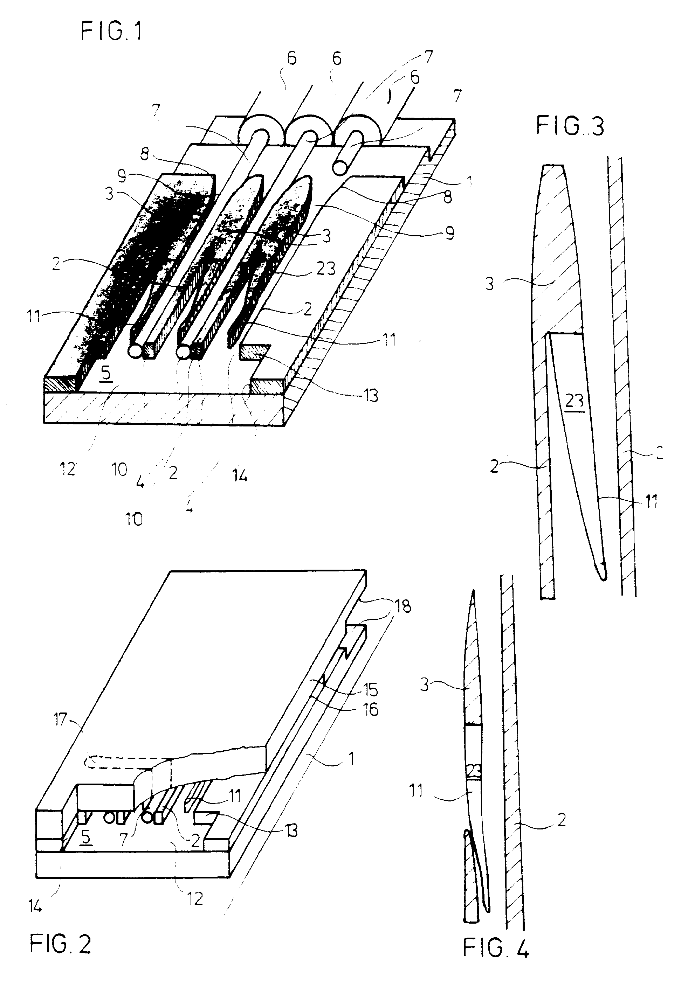

Die Figur 1 zeigt schematisch eine Vorrichtung bzw. eine steckerartige Kopplung für den Anschluß von z.B. drei Lichtleitfasern 7 an ein nicht dargestelltes integriert-optisches Bauelement. Die Vorrichtung besteht aus einer Träger- bzw.

Substratplatte 1 mit drei Anschlagstegen 2 und zugehörigen Andruckelementen 3. Die Anschlagflächen 4 der Anschlagstege 2 schließen mit der Oberfläche 5 der Substratplatte 1 einen Winkel von ca. 90° ein.

Die Andruckelemente 3 bilden zusammen mit den Anschlagstegen 2 eine Struktur aus demselben Material, die in später beschriebener Weise auf die Trägerplatte 1 aufgebracht wird und mit ihr fest verbunden ist. Davon ausgenommen sind die Federzungen 11 der Andruckelemente 3, die gegenüber der Trägerplatte 1 bzw. den Anschlagstegen 2 und Anschlagflächen 4 -von oben betrachtet- seitlich beweglich sind. Um diese Beweglichkeit zu ermöglichen, sind zwischen den Zungen 11 und den Oberflächen 5 Spalte 23 im »m-Bereich vorhanden, deren Herstellungsweise ebenfalls später beschrieben wird.

Die Figur 3 zeigt diesen Spalt 23 von unten nach oben bzw. von der Trägerplattenoberfläche 5 gesehen und die Figur 4 eine etwas abweichende Form der Struktur. Der Spalt 23 reicht von der Spitze der Federzungen 11 bis zu ihrem Übergang zum fest mit der Trägerplatte verbundenen Teil des Andruckelements 3, so daß die beweglichen Federzungen 11 wie eine eingespannte Biegefeder wirken, jedoch integrierter Bestandteil des auf der Trägerplatte sitzenden Strukturmateriales sind.

Die im Koppelbereich von der Schutzbeschichtung 6 befreiten Lichtleitfasern 7 werden von der Rückseite der Vorrichtung her durch Einfädelhilfen 8 und Führungskanäle 9 hindurch zwischen Anschlagsteg 2 und Andruckelement 3 bis zur Stirnfläche 10 der Anschlagstege 2 eingeschoben. Dabei werden die Federzungen 11 gespannt und drücken mit der so bewirkten Kraft die Fasern 7 gegen die Anschlagstege 2, was die exakte horizontale Positionierung sicherstellt. Das nicht dargestellte integriert-optische Bauelement wird im Aufnahmebereich 12 mit entsprechenden Anschlagflächen 13 und 14 positioniert.

Anschließend wird, wie in Figur 2 dargestellt, die Deckplatte 15 aus teilweise oder ganz elastischem Material 16 aufgebracht, die die Fasern 7 zur vertikalen Postitionierung gegen die Substratplatte 1 drückt. Durch einzelne Löcher oder wie angedeutet durch einen Querspalt 17 kann ggf. Immersionsflüssigkeit zur verbesserten Ankoppelung oder Klebstoff zur endgültigen Fixierung der Fasern eingebracht werden. Die Deckplatte 15 dient über in diese und in die Substratplatte 1 eingebrachte Stufen 18 auch zur Zugentlastung der Lichtleitfaser 7 an der Schutzbeschichtung 6.

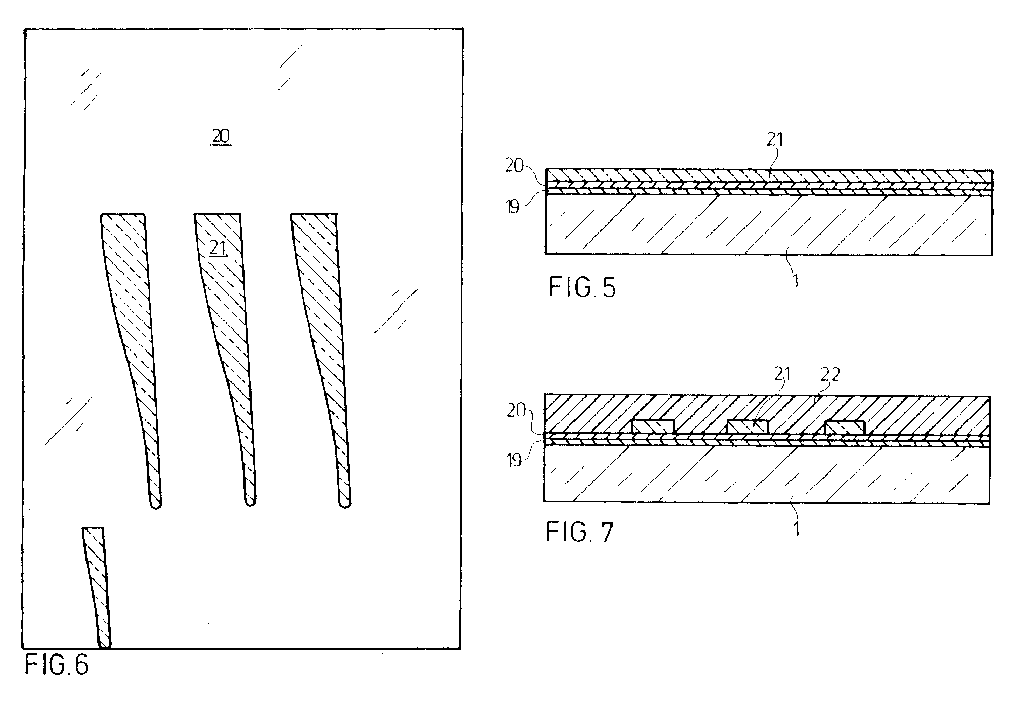

Ausgehend von der in Figur 1 gezeigten fertigen Struktur zeigen die Figuren 5 bis 8 schematisch die Herstellung eines Justierelementes mittels der bekannten Röntgentiefenlithographie und Galvanoplastik. Zur Herstellung der Federn 11, die nicht fest mit der Substratplatte 1 verbunden sein dürfen, wird ein Verfahren angewendet, wie es z.B. in der DE-OS 37 27 142 beschrieben ist. Dabei wird der Spalt 23 mittels partiellem Aufbringen einer Zwischenschicht 21 erzeugt, die später wieder entfernt wird.

Die Figur 5 zeigt die Substratplatte 1, die zur Vermeidung des Aufbaus von durch unterschiedliche thermische Ausdehnung bewirkten Spannungen und Maßverschiebungen aus demselben Material wie das integriert-optische Bauelement bestehen sollte. Vorwiegend werden hier z.Zt. verschiedene Gläser und Lithiumniobat (LiNbO₃) verwendet. Die Substratplatte wird zunächst mit einer Chromschicht 19, die die Haftung der anschließend aufgebrachten Metallschichten sicherstellt und dann mit einer Galvanikstartschicht 20 versehen. Auf die so vorbereitete Substratplatte 1 wird eine wenige »m starke, später wieder entfernbare Zwischenschicht 21 aufgetragen und mit lithographischen und ätztechnischen Methoden so strukturiert, daß eine den Federzungen 11 bzw. dem Spalt 23 plus einem Sicherheitsbreich von 10 »m rundum entsprechende Struktur entsteht (Figur 6).

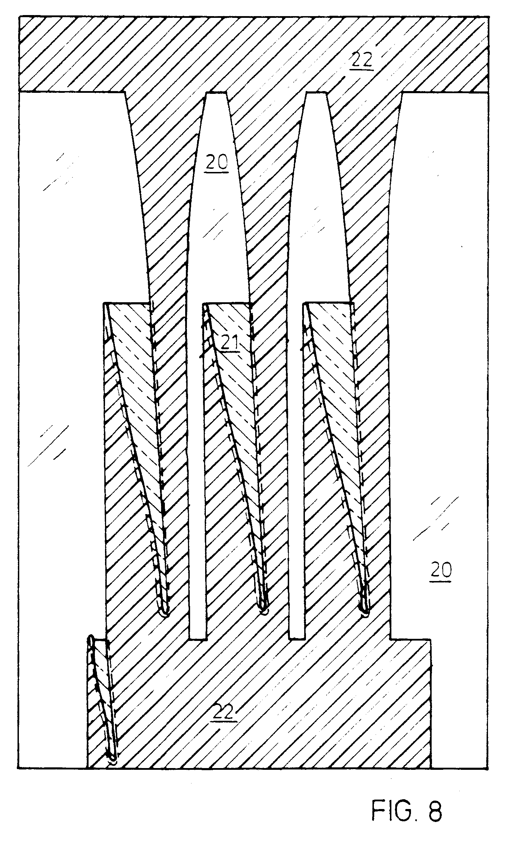

Nun wird auf die Oberfläche eine ca. 130 »m dicke Schicht 22 eines positiv-Röntgenresists (z.B. PMMA) aufgebracht (Figur 7), der so über eine Röntgenmaske in Teilbereichen mit Synchrotronstrahlung bestrahlt wird, daß nach dem Weglösen der bestrahlten Bereiche ein Negativ der geplanten Anschlagsteg- und Andruckelementstruktur entsteht (Figur 8).

Die so geschaffenen Vertiefungen werden sodann galvanisch bis zum Überwachsen der Resiststruktur mit Nickel aufgefüllt. Als nächster Schritt wird eine mechanische Oberflächenbearbeitung zur Herstellung einer definierten Höhe der Nickelstruktur durchgeführt und der restliche Röntgenresist entfernt.

Abschließend wird die Zwischenschicht 21 entfernt, damit der Spalt 23 entsteht und so die freie Beweglichkeit der Federzungen 11, wie in der Figur 1 dargestellt, gesichert. Die im vorstehenden genannten Materialien stellen nur Beispiele dar, für die Herstellung der entsprechenden Strukturen sind auch andere Materialien möglich.

### Bezugszeichenliste:

1 Träger- bzw. Substratplatte
2 Anschlagstege
3 Andruckelemente
4 Anschlagflächen
5 Oberfläche
6 Schutzbeschichtung
7 Lichtleitfasern
8 Einfädelhilfen
9 Führungskanäle
10 Stirnflächen
11 Federzungen
12 Aufnahmebereich
13 Anschlagflächen
14 Anschlagflächen
15 Deckelplatte
16 elastisches Material
17 Querspalt
18 Stufen
19 Chromschicht
20 Galvanikstartschicht
21 Zwischenschicht
22 Röntgenresistschicht
23 Spalt

## Patentansprüche

1. Vorrichtung zum Positionieren von Lichtleitfasern, vorzugsweise zur Positionierung von Lichtleitfasern in Lichtleitfaser-Verbindungselementen oder bezüglich integriert-opti scher oder diskreter optischer oder opto-elektronischen Bauelemente, bestehend aus:
a) einer Trägerplatte (1) aus maßstabilem Substratmaterial mit
b) einem oder mehreren Führungskanälen (9) zur Aufnahme von Lichtleitfasern (7) auf der Trägerplatte (1),
c) Federelementen (11) zum Anpressen einer Faser (7) in einen zugehörigen Führungskanal und
d) einem Deckel, der über der Platte und den Führungskanälen angebracht ist,
gekennzeichnet durch folgende Merkmale:
e) jeder Führungskanal (9) ist in eine, auf der Oberfläche (5) der Trägerplatte (1) festsitzenden strukturierten Schicht (2, 3, 4) gebildet,
f) die Federelemente (11) bestehen jeweils aus einer federnden Zunge (11), die einen Teil einer seitlichen Begrenzungsfläche (4) des jeweiligen Führungskanals bildet,
g) die Zungen (11) sind integrale Bestandteile des Materials der strukturierten Schicht (2, 3, 4) und bezüglich der gegenüberliegenden seitlichen Begrenzungsfläche (4) des jeweiligen Führungskanals und den aufzunehmenden Lichtleitfasern (7) gegenüber nach Art einer an einem Ende eingespannten Blattfeder beweglich,
h) zwischen dem federnden Teil der Zungen (11) und dem Kanalgrund ist ein Spalt (23) mit einer Breite im »m-Bereich vorhanden, der die federnde Bewegung der Zungen ermöglicht.

2. Vorrichtung nach Anspruch 1, gekennzeichnet durch die weiteren Merkmale:
a1)die Trägerplatte (1) besteht aus demselben Material oder aus einem Material mit demselben thermischen Ausdehnungskoeffizient wie das Material integriert-optischer Bauelemente, vorzugsweise Glas oder Lithiumniobat (LiNbO₃).

3. Vorrichtung nach Anspruch 1, gekennzeichnet durch die weiteren Merkmale:
i) Die Strukturen (2, 3, 4) sowie die integrierten Federelemente (11) sind aus einem Metall oder einer Metallegierung hergestellt.

4. Vorrichtung nach Anspruch 1, gekennzeichnet durch die weiteren Merkmale:
e1)Die Führungskanäle (9) gehen durch die Strukturen (2, 3, 4) hindurch bis zur Trägeroberfläche (5).

5. Vorrichtung nach Anspruch 1, gekennzeichnet durch die weiteren Merkmale:
e2)Die seitlichen Anschlagflächen (4) der Führungskanäle (9) bilden mit dem Kanalgrund bzw. der Trägeroberfläche (5) einen Winkel von etwa 90°.

6. Vorrichtung nach Anspruch 1 oder einem der folgenden, dadurch gekennzeichnet, daß nach dem Einführen der Fasern diese durch Auftragung eines Klebers oder Gießharzes endgültig fixiert werden.

7. Vorrichtung nach Anspruch 1 oder einem der folgenden, dadurch gekennzeichnet, daß Trägerplatte (1), Anschlagsteg (2) und Andrückelemente (3) aus einem galvanisch abgeschiedenen Material bestehen und daß nach dem Einführen der Fasern diese durch galvanische Abscheidung von weiterem Metall unter Verwendung der Trägerplatte (1), Anschlagsteg (2) und Andrückelementet (3) als Kathode endgültig fixiert werden.

## Claims

1. Device for positioning optical fibres, preferably for positioning optical fibres in connection means or with respect to integrated-optical or discrete, optical or opto-electronic structural elements, comprising:
a) a base plate (1) formed from dimensionally stable substrate material, having
b) one or a plurality of guide channels (9) for receiving optical fibres (7) on the base plate (1);
c) resilient means (11) for pressing a fibre (7) into an associated guide channel; and
d) a cover, which is mounted above the plate and the guide channels,
characterised by the following features:
e) each guide channel (9) is formed in a structured layer (2, 3, 4), which sits firmly on the surface (5) of the base plate (1),
f) the resilient means (11) each comprise a resilient projection member (11), which forms a portion of a lateral boundary face (4) of the respective guide channel,
g) the projection members (11) are integral component parts of the material of the structured layer (2, 3, 4) and are displaceable relative to the oppositely situated lateral boundary face (4) of the respective guide channel and opposite the optical fibres (7) to be accommodated, in the form of a plate spring clamped in position at one end,
h) a gap (23), having a width within the »m range and permitting the resilient movement of the projection members, exists between the resilient portion of the projection members (11) and the base of the channel.

2. Device according to claim 1, characterised by the additional features:
a1) the base plate (1) is formed from the same material, or from a material having the same coefficient of thermal expansion, as the material of integrated-optical structural elements, preferably glass or lithium niobate (LiNbO₃).

3. Device according to claim 1, characterised by the additional features:
i) the structures (2, 3, 4) and the integral resilient means (11) are produced from a metal or a metallic alloy.

4. Device according to claim 1, characterised by the additional features:
e1) the guide channels (9) extend through the structures (2, 3, 4) to the surface (5) of the base plate.

5. Device according to claim 1, characterised by the additional features:
e2) the lateral stop faces (4) of the guide channels (9) form an angle of about 90° with the base of the channel or respectively with the surface (5) of the base plate.

6. Device according to claim 1 or one of the subsequent claims, characterised in that, after the introduction of the fibres, the latter are definitively secured by the application of an adhesive or casting resin.

7. Device according to claim 1 or one of the subsequent claims, characterised in that base plate (1), stop web (2) and pressure elements (3) are formed from an electrodeposited material, and in that, after the introduction of the fibres, the latter are definitively secured by an electrodeposition of additional metal, using the base plate (1), stop web (2) and pressure elements (3) as the cathode.

## Revendications

1. Dispositif de positionnement de fibres optiques de préférence pour le positionnement de fibres optiques dans des éléments de connexion de fibres optiques ou concernant des éléments de construction optiques intégrés ou optiques discrets ou optoélectroniques, composés :
a) d'une plaque support (1) en un matériau de substrat de dimensions stables avec,
b) un ou plusieurs canaux de guidage (9) pour le logement des fibres optiques (7) sur la plaque support (1),
c) des éléments flexibles (11) pour serrer une fibre (7) dans un canal de guidage associé et,
d) un couvercle qui est mis en place sur la plaque et les canaux de guidage,
caractérisé par les caractéristiques suivantes :
e) chaque canal de guidage (9) est constitué en une couche (2, 3, 4) structurée fixée sur la surface (5) de la plaque support (1),
f) les éléments flexibles (11) sont composés respectivement d'une lame élastique (11) qui forme une partie d'une face de délimitation (4) du canal de guidage correspondant,
g) les lames (11) sont des composants intégraux du matériau de la couche structurée (2, 3, 4) et sont mobiles par rapport à la face de délimitation (4) latérale opposée du canal de guidage correspondant et par rapport aux fibres optiques (7) à loger, à la manière d'un ressort à lame encastré à une extrémité,
h) entre la partie élastique des lames (11) et la base du canal, il existe un interstice (23) ayant une largeur de l'ordre du »m, qui rend possible le mouvement élastique des lames.

2. Dispositif selon la revendication 1, caractérisé par d'autres critères :
a1 : la plaque support (1) est composée du même matériau ou d'un matériau ayant le même coefficient de dilatation thermique que le matériau des éléments de construction optiques intégrés, de préférence du verre ou du niobate de lithium (LiNbO₃).

3. Dispositif selon la revendication 1, caractérisé par d'autres critères :
i) les structures (2, 3, 4) ainsi que les éléments flexibles intégrés (11) sont fabriqués en un métal ou un alliage métallique.

4. Dispositif selon la revendication 1, caractérisé par d'autres critères :
e1) les canaux de guidage (9) traversent les structures (2, 3, 4) jusqu'à la surface support (5).

5. Dispositif selon la revendication 1, caractérisé par d'autres critères :
e2) les faces d'arrêt (4) latérales des canaux de guidage (9) forment avec le fond du canal ou la surface support (5) un angle environ de 90°.

6. Dispositif selon la revendication 1 ou une des suivantes, caractérisé en ce qu'après leur introduction les fibres sont fixées définitivement par application d'une colle ou d'une résine moulée.

7. Dispositif selon la revendication 1 ou une des suivantes, caractérisé en ce que la plaque support (1), la barrette d'arrêt (2) et l'élément de pression (3) se composent d'un matériau se déposant par galvanoplastie et en ce que, après introduction des fibres, ces éléments sont fixés définitivement par précipitation galvanoplastique d'un autre métal en utilisant la plaque support (1), la barrette d'arrêt (2) et l'élément de pression (3) comme cathode.
